(19) Europäisches Patentamt
European Patent Office
Office européen des brevets

(11) EP 0 868 006 B1

(12) **FASCICULE DE BREVET EUROPEEN**

(45) Date de publication et mention de la délivrance du brevet:
**06.08.2008 Bulletin 2008/32**

(51) Int Cl.:
***H02J 13/00*** *(2006.01)* ***H04B 3/58*** *(2006.01)*

(21) Numéro de dépôt: **98200554.8**

(22) Date de dépôt: **20.02.1998**

(54) **Dispositif pour compenser l'atténuation des signaux de télécommande centraliseé et des harmoniques sur un réseau electrique**

Vorrichtung zum zentralisierten Dämpfungskompensieren von Fernsteuerungssignalen und Oberschwingungen in einem Stromnetz

Apparatus for compensation of centralised remote control signal attenuation and of harmonics on power lines

(84) Etats contractants désignés:
**AT BE DE FR GR MC NL**
Etats d'extension désignés:
**SI**

(30) Priorité: **27.03.1997 FR 9703928**

(43) Date de publication de la demande:
**30.09.1998 Bulletin 1998/40**

(73) Titulaire: **Actaris S.A.S.**
**92100 Boulogne-Billancourt (FR)**

(72) Inventeurs:
- **Huet, Jean-Philippe**
**86000 Poitiers (FR)**
- **Tissier, Jean-François**
**86360 Chasseneuil du Poitou (FR)**
- **Gogce, Metin**
**86130 Saint Georges Les Baillargeaux (FR)**
- **Michalak, Pascale**
**92140 Clamart (FR)**

(74) Mandataire: **Feray, Valérie et al**
**Feray Lenne Conseil**
**39/41, avenue Aristide Briand**
**92163 Antony (FR)**

(56) Documents cités:
**EP-A- 0 666 632**
**EP-A- 0 689 300**
**US-A- 5 349 517**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



EP 0 868 006 B1

## Description

La présente invention est relative à un dispositif pour un système de télécommande centralisée apte à compenser les effets d'atténuation du signal.

Dans des systèmes de télécommande centralisée, un nombre de solutions a été proposé pour surmonter le problème de l'atténuation du signal de télécommande dû aux appareils possédant une impédance faible qui sont branchés au réseau électrique

Dans une des solutions, la puissance du signal de télécommande centralisée est simplement augmentée au niveau du générateur de télécommande centralisée. L'inconvénient de cette solution est que cette augmentation du signal pour compenser la présence des charges faibles en aval du point d'injection s'accompagnerait forcément d'une hausse du taux du signal en amont du générateur.

Dans une autre solution, un filtre bouchon, du type actif ou passif, pourra être branché au réseau en amont d'une charge faible pour masquer les effets de la charge au niveau des signaux de télécommande centralisée. Cette solution possède l'inconvénient qu'un filtre bouchon doit être connecté sur le départ de chaque charge, nécessitant autant de bouchons que de charges de faible impédance.

L'utilisation des dispositifs de relayage qui servent à réamplifier des signaux de télécommunication présents sur le réseau est également connue comme une autre solution. Or, ces dispositifs sont en général configurés pour compenser les pertes en lignes et non pour compenser l'influence des charges faibles.

On connait également du document EP 0689300 un dispositif selon le préambule de la revendication 1.

Le but de la présente invention est de fournir un dispositif pouvant supprimer l'influence des charges d'impédance faible qui ne possède pas les inconvénients des dispositifs connus et qui ajoute d'autres fonctionnalités avantageuses.

La présente invention est caractérisée en ce que le dispositif comprend en outre un un circuit de compensation harmonique apte à recevoir un signal représentatif du niveau d'une ou plusieurs composantes harmoniques sur le réseau et à générer un deuxième signal de compensation, un circuit de sommation pour sommer les premier et deuxième signaux de compensation pour produire un signal de contrôle et en ce que le circuit d'injection comprend une source d'énergie, un pont onduleur et un circuit de couplage connecté au réseau le pont onduleur étant connecté au circuit de sommation au travers d'une carte de contrôle pour découper la tension fournie par la source de tension en séjour au signal de contrôle et pour injecter sur le réseau un signal global destiné à compenser à la fois la chute du signal de télécommande centralisée et la présence d'une ou plusieurs harmoniques.

De préférence, le circuit de compensation de télécommande centralisée comprend un filtre apte à extraire le signal représentatif du taux de télécommande centralisée sur le réseau ainsi qu'un circuit de traitement pour générer ledit premier signal de compensation de télécommande centralisée ayant la même phase que le signal reçu du réseau et une amplitude équivalente à celle du signal du réseau multipliée par un gain.

Le gain pourra avoir une valeur fixe ou une valeur dépendante d'autres conditions, par exemple, les pertes dans le circuit d'injection (voir ci-dessous).

De la même façon, dans une autre réalisation, le circuit de compensation harmonique comprend un filtre apte à extraire le signal représentatif d'une ou plusieurs composantes sur le réseau ainsi qu'un circuit de traitement pour générer ledit deuxième un signal de compensation, le signal de compensation étant composé d'un ou plusieurs signaux harmoniques ayant la même amplitude que le ou les signaux reçus mais une phase en opposition avec la phase du ou des signaux reçus.

Dans un mode de réalisation, le circuit de compensation harmonique peut être configuré pour traiter plusieurs harmoniques. Cependant, dans de nombreuses applications la compensation d'une seule harmonique du réseau, par exemple, la cinquième, sera suffisante pour améliorer la qualité du réseau. Le circuit de compensation télécommande pourra être également configuré pour traiter plusieurs fréquences de télécommande.

Dans une réalisation préférée, le dispositif comprend également un capteur de surveillance connecté en aval du circuit d'injection au point de connexion du circuit avec le réseau, le capteur de surveillance fournissant au circuit de compensation harmonique et/ou au circuit de compensation télécommandé un signal de surveillance représentatif du signal injecté sur le réseau afin de permettre aux circuits de compensation de faire une correction pour les pertes d'amplitude et/ou de phase dans le circuit d'injection.

Or, dans le cas où les caractéristiques du circuit d'injection sont relativement constantes et connues, une correction invariable peut être effectuée par les circuits de compensation. Dans ce cas, l'utilisation d'un capteur de surveillance pourra être évitée.

Dans un mode de réalisation, le circuit de couplage est apte à bloquer la transmission de l'onde fondamentale du réseau au circuit d'injection et de minimiser des pertes dans le signal injecté.

Néanmoins, même avec un circuit de couplage qui filtre les effets fondamentaux, il y aura quand même partie de l'onde fondamentale qui sera transmise. Par conséquent, dans un mode de réalisation préféré, le circuit d'injection comprend en plus un circuit shunt connecté entre le circuit de couplage et le pont onduleur, le circuit shunt présentant une impédance très basse par rapport à la fréquence fondamentale pour court-circuiter la fréquence fondamentale. Ce circuit shunt peut contenir également un circuit bouchon accordé à la fréquence du signal télécommande et/ou aux fréquences des signaux harmoniques à injecter et qui possède une impédance relativement élevée par rapport à ces fréquences pour minimiser la puissance d'injection nécessaire.

La construction exacte du circuit de couplage et du circuit de shunt dépendra de la fréquence du réseau, du signal de télécommande centralisée et du nombre d'harmoniques à traiter. Or, les principes de ce genre de circuit sont bien connus et un homme de métier pourra facilement construire des circuits possédant les caractéristiques nécessaires.

Le dispositif de la présente invention est particulièrement apte à être connecté en combinaison avec un générateur de télécommande centralisée, par exemple dans la localité d'une sous-station haute tension/moyenne tension.

De préférence, pour extraire le signal représentatif du signal de télécommande centralisée injecté sur le réseau, le dispositif comprend également un capteur de mesure branché au générateur de télécommande centralisée en amont du point d'injection du signal de télécommande par le générateur.

Dans le cas où le dispositif est utilisé en combinaison avec un générateur de télécommande dans une sous-station de distribution d'électricité, le signal représentatif des harmoniques sur le réseau peut être extrait par les moyens d'une connexion avec le jeu de barres de la sous-station.

De préférence, et pour faciliter la connexion du dispositif avec le réseau, le dispositif est connecté en parallèle avec le générateur au réseau. Or, il est également possible d'envisager une connexion en série.

L'invention sera mieux comprise à la lecture de la description qui suit d'un mode de réalisation de l'invention, donné à titre d'exemple illustratif et non limitatif et faisant référence aux dessins annexés sur lesquels :

La figure 1 montre un dispositif selon l'invention branché en parallèle avec un générateur de télécommande centralisée ;

La figure 2 montre les éléments du circuit de compensation harmonique du dispositif de la figure 1 ; et

La figure 3 montre un schéma électrique du dispositif et du générateur en parallèle pour expliquer comment dériver le gain du dispositif.

En se référant à la figure 1, un générateur de télécommande centralisée 12 est montré dans la localité d'un poste source haute tension/moyenne tension. Un signal de télécommande centralisée est injecté sur le réseau via le transformateur 11. La charge en amont du point d'injection du signal de télécommande, y compris le transformateur HT/MT, est représenté par la charge 10. Les appareils branchés au jeu de barres du poste source et qui définissent la charge en aval du générateur sont représentés par la charge 100. Le dispositif de la présente invention est défini par les éléments dans la case 30 ainsi que les capteurs 13, 14, 15.

Comme la figure 1 le montre, un capteur de mesure 13 est branché au générateur de telécommande en amont de son transformateur d'injection 11 pour fournir une image du signal de télécommande injecté sur le réseau au circuit de compensation 25. De la même manière un capteur 14, branché au jeu de barres du poste source, fournit au circuit de compensation 26 un signal qui peut être analyser pour déterminer la présence des composantes harmoniques sur le réseau.

Un capteur de surveillance 15 surveille les signaux de compensation de télécommande et harmonique qui sont injectés par le dispositif. Le signal reçu du capteur de surveillance 15 est utilisé par les circuits de compensation 25, 26 pour corriger les changements de phase et amplitude introduites par les éléments 16-20 définissant le circuit d'injection du dispositif.

En réponse au signal reçu du capteur 13 représentant le signal injecté par le générateur 12, le circuit de compensation génère un signal de compensation ayant la même fréquence et phase que le signal de télécommande injecté par le générateur. L'amplitude du signal de compensation sera équivalent à l'amplitude du signal injecté multiplié par un facteur de gain. Ce gain peut être une valeur constante ou variable selon les informations reçues du capteur de surveillance 15. La phase du signal généré peut être également corrigée de la même façon par le signal du capteur de surveillance.

Le signal reçu du capteur 14 est analysé par le circuit de compensation 26 pour isoler une ou plusieurs harmoniques présentes sur le réseau. Chaque composante harmonique isolée est déphasée à 180° pour générer un signal de compensation. L'amplitude et la phase exacte de ce signal de compensation sont corrigées en réponse au signal reçu du capteur 15.

Les éléments du circuit de compensation 26 sont montrés en détail en figure 2.

Le signal 31 reçu du capteur 14 est filtré par les filtres 32 pour isoler les composantes 33 de chaque harmonique. Un circuit déphaseur 34 déphase les composantes harmoniques pour produire une série de signaux de la même amplitude mais en opposition de phase aux harmoniques sur le réseau.

Le signal 35 du capteur de surveillance est filtré par les filtres 36 pour isoler les composantes harmoniques injectées sur le réseau par le dispositif. La phase de chaque composante injectée est comparée à la phase de la composante mesurée sur le réseau par le comparateur de phase 37. Le résultat de cette comparaison est appliqué au circuit déphasé pour corriger les pertes dans le circuit d'injection et pour assurer l'opposition de phase des signaux injectés aux signaux présents sur le réseau. De la même manière, le comparateur d'amplitude 38 compare les amplitudes des deux signaux et un signal de correction est envoyé à un correcteur d'amplitude 39 pour assurer les amplitudes des signaux injectés correspondants aux amplitudes des signaux polluants sur le réseau.

Une description détaillée d'un filtre actif fonctionnant selon les mêmes principes du circuit de compensation harmonique de la présente invention se trouve dans le brevet français FR 2716045 au nom de Schlumberger Industries S.A.

Les mêmes éléments du circuit de compensation harmonique 26 se retrouvent dans le circuit de compensation de télécommande 25. Dans ce cas, le déphaseur assure l'identité entre la phase du signal de télécommande injecté par le générateur et le signal fourni par le dispositif et le correcteur d'amplitude multiplie le signal reçu par un gain déterminé. La valeur du gain pourra être également corrigée par les résultats de la comparaison entre l'amplitude du signal provenant du générateur et celle du signal injecté par le dispositif.

Le circuit de sommation 23 somme les signaux de correction 40, 41 envoyés par les circuits de compensation pour générer un signal de contrôle 42 envoyé à la carte de contrôle 23 du type modulation de la largeur d'impulsions associée au pont onduleur 21.

Un redresseur 22 connecté au réseau fournit une source de tension continue. Le pont onduleur 21 découpe la tension fournie par le redresseur 22 en réponse au signal de contrôle 42 et un signal global de compensation est injecté sur le réseau via les éléments 16-20 du circuit d'injection. Un circuit de sortie 20 filtre les fréquences de découpage et HF générées par la commande MLI et le pont onduleur 21. Un transformateur 19 permet d'adapter la tension du signal de sortie.

Le circuit d'injection comprend également un circuit de shunt 18 apte à court-circuiter la fréquence fondamentale aux bornes du primaire du transformateur d'injection 17. Le circuit de shunt 18 contient également un circuit bouchon possédant une impédance élevée à la fréquence de la télécommande et un circuit bouchon à la fréquence des harmoniques injectées.

Un circuit de couplage 16 comprenant plusieurs circuits résonnants apte à bloquer la transmission de l'onde fondamentale est également fournie pour minimiser les pertes de transmission des composantes du signal injecté sur le réseau. La combinaison du circuit de couplage 16 avec le circuit shunt empêche la transmission de pratiquement la totalité de l'onde fondamentale au pont onduleur.

Les circuits pour générer les signaux de compensation d'harmonique et de télécommande, ainsi que les éléments du circuit d'injection, le circuit shunt etc., ont été décrits de façon générale. Un homme de métier travaillant dans le domaine de la télécommande centralisée sera néanmoins suffisamment familiarisé avec les principes de tels circuits pour créer les circuits détaillés, basés sur cette description.

En se référant à la figure 3, une méthode pour déterminer le gain à appliquer dans le circuit de compensation de télécommande sera décrit. Dans la figure 3 :

- *Vp* représente la tension appliquée par le dispositif
- *Zc* représente l'impédance du dispositif
- *ic* représente le courant appliqué par le dispositif
- *Vs* représente la tension du générateur de télécommande
- *Za* représente l'impédance des charges en amont du générateur (charge 10 dans la figure 1)
- ia représente le courant appliqué par le générateur
- *Zch* représente l'impédance des charges en aval du générateur (charge 100 dans la figure 1)
- *Vjb* représente la tension sur la charge Zch.

Les équations du système sont données par :

$$Vjb = Vp - Zc.ic$$

$$Vjb = Vs - Za.ia$$

$$Vjb = Zch.(ia + ic)$$

ce qui peut également s'écrire :

$$ia = \frac{Vs - Vjb}{Za}$$

$$ic = \frac{Vp - Vjb}{Zc}$$

$$Vjb = Zch.(ia + ic)$$

Si l'on réécrit les équations ci-dessus, les relations suivantes sont dérivées :

$$(1) \qquad Vjb = \frac{Vs + \frac{Za}{Zc}.Vp}{1 + Za.\left(\frac{1}{Zch} + \frac{1}{Zc}\right)}$$

$$(2) \qquad ia = \frac{\frac{1}{Zch}.Vs + \frac{1}{Zc}.(Vs - Vp)}{1 + Za.\left(\frac{1}{Zch} + \frac{1}{Zc}\right)}$$

$$(3) \qquad ic = \frac{\frac{1}{Zch}.Vp + \frac{1}{Za}.(Vp - Vs)}{1 + Zc.\left(\frac{1}{Zch} + \frac{1}{Za}\right)}$$

Le système fonctionne correctement seulement si le dispositif ne fournit que de la tension en amont de son point de connexion. Autrement dit, les courantes *ia*, *ic* en aval du dispositif et du générateur doivent être positives :

$$ia \geq 0$$

et

$$ic \geq 0$$

Si l'on transpose ces conditions dans les relations 1, 2, 3 dérivées ci-dessus, on obtient :

$$(4) \qquad \frac{Zc + Zch}{Zch}.Vs \geq Vp$$

$$(5) \qquad Vp \geq \frac{Zch}{Za + Zch}.Vs$$

Comme on l'a expliqué, le circuit de compensation télécommande génére une tension *Vp* proportionnelle à la tension *Vs* du générateur :

$$(6) \qquad Vp = K.Vs$$

où K représente le gain du dispositif. En utilisant les équations 4, 5 qui décrivent les conditions de bon fonctionnement du système, on peut obtenir la relation suivante pour déterminer la valeur de gain qui devrait être appliquée :

$$(7) \qquad \frac{Zc + Zch}{Zch} \geq K \geq \frac{Zch}{Za + Zch}$$

L'inégalité 7 montre que le gain n'est pas directement lié aux tensions mais plutôt au rapport des impédances réseaux. La valeur K = 1 satisfait toujours les conditions de l'inégalité 7. Dans le cas où la charge Zch est plus faible, un gain K plus faible peut être appliqué.

**Revendications**

1. Dispositif (14-15, 30) pour un système de télécommande centralisée apte à compenser l'atténuation du signal de télécommande et des harmoniques sur un réseau électrique, le dispositif comprenant un circuit (25) de compensation de télécommande apte à recevoir un signal représentatif du taux de télécommande sur le réseau et à générer un premier signal (40) de compensation et un circuit d'injection, **caractérisé en ce qu'**il comporte en outre un circuit (26) de compensation harmonique apte à recevoir un signal (31) représentatif du niveau d'une ou plusieurs composantes harmoniques (33) sur le réseau et à générer un deuxième signal (41) de compensation, un circuit (23) de sommation pour sommer les premier et deuxième signaux (40, 41) de compensation pour produire un signal (42) de contrôle et **en ce que** le circuit d'injection comprend une source (22) d'énergie, un pont onduleur (21) et un circuit (16) de couplage connecté au réseau, le pont onduleur (21) étant connecté au circuit (24) de sommation au travers d'une carte (23) de contrôle pour découper la tension fournie par la source de tension en réponse au signal de contrôle et pour injecter sur le réseau un signal global destiné à compenser à la fois la chute du signal de télécommande centralisée et la présence d'une ou plusieurs harmoniques.

2. Dispositif selon la revendication 1 dans lequel le circuit (25) de compensation de télécommande centralisée comprend un filtre apte à extraire le signal représentatif du taux de télécommande centralisée sur le réseau ainsi qu'un circuit de traitement pour générer ledit premier signal de compensation (40) ayant la même phase que le signal reçu du réseau et une amplitude équivalente à celle du signal du réseau multipliée par un gain.

3. Dispositif selon la revendication 1 ou 2 dans lequel le circuit (26) de compensation harmonique comprend un filtre (32) apte à extraire le signal représentatif d'une ou plusieurs composantes sur le réseau ainsi qu'un circuit (34-39) de traitement pour générer ledit deuxième signal (41) de compensation, le signal de compensation étant composé d'un ou plusieurs signaux harmoniques ayant la même amplitude que le ou les signaux reçus mais une phase en opposition avec la phase du ou des signaux reçus.

4. Dispositif selon l'une quelconque des revendications 1 à 3 comprenant également un capteur (15) de surveillance connecté en aval du circuit d'injection au point de connexion du circuit avec le réseau, le capteur de surveillance fournissant au circuit (26) de compensation harmonique et/ou au circuit (25) de compensation télécommandé un signal de surveillance représentatif du signal injecté sur le réseau afin de permettre aux circuits de compensation de faire une correction pour les pertes d'amplitude et/ou de phase dans le circuit d'injection.

5. Dispositif selon l'une quelconque des revendications 1 à 4 dans lequel le circuit (16) de couplage est apte à bloquer la transmission de l'onde fondamentale du réseau au circuit d'injection.

6. Dispositif selon l'une quelconque des revendications 1 à 5 dans lequel le circuit d'injection comprend en plus un circuit shunt (18) connecté entre le circuit (16) de couplage et le pont (21) onduleur, le circuit shunt (18) présentant une impédance très basse par rapport à la fréquence fondamentale pour court-circuiter la fréquence fondamentale.

7. Dispositif selon la revendication 6 dans lequel le circuit shunt (18) comprend également un circuit bouchon accordé à la fréquence du signal télécommande et/ou aux fréquences des signaux harmoniques à injecter et qui possède une impédance relativement élevée par rapport à ces fréquences pour minimiser la puissance d'injection.

8. Système de télécommande centralisée, **caractérisé en ce qu'**il comporte un dispositif (14-15, 30) selon l'une quelconque des revendications 1 à 7, connecté à un générateur (12) de télécommande centralisée.

9. Système de télécommande centralisée selon la revendication 8 comprenant également un capteur (13) de mesure branché au générateur de télécommande centralisée en amont du point d'injection du signal de télécommande du générateur.

10. Système de télécommande centralisée selon l'une quelconque des revendications 8 à 9 **caractérisé en ce qu'**il est utilisé dans une sous-station de distribution d'électricité, comprenant une connexion au jeu de barres de la sous-station apte à fournir le signal représentatif des harmoniques sur le réseau.

## Claims

1. Device (14-15,30) for a centralized remote control system able to compensate for attenuation of the remote control signal and of harmonics on an electric network, comprising a remote control compensation circuit (25) able to receive a signal representing the remote control load on the network and to generate a first compensation signal (40), and an injection circuit, **characterized in that** it also comprises a harmonic compensation circuit (26) able to receive a signal (31) representing the level of one or more harmonic components (33) on the network and to generate a second compensation signal (41), a summation circuit (23) to sum the first and second compensation signals (40,41) to produce a control signal (42), and **in that** the injection circuit comprises a power source (22), a bridge inverter (21) and a coupling circuit (16) connected to the network, the bridge inverter (21) being connected to the summation circuit (24) via a control card (23) to switch the voltage supplied by the voltage source in response to the control signal and to inject a global signal into the network intended to compensate both the drop in the centralized remote control signal and the presence of one or more harmonics.

2. Device according to claim 1, wherein the centralised remote control compensation circuit (25) comprises a filter able to extract the signal representing the load of centralised remote control on the network, and a processing circuit to generate said first compensation signal (40) having the same phase as the signal received from the network and an amplitude equivalent to that of the network signal multiplied by a gain.

3. Device according to claim 1 or 2, wherein the harmonic compensation circuit (26) comprises a filter (32) able to extract the signal representing one or more components on the network, and a processing circuit (34-39) to generate said second compensation signal (41), the compensation signal consisting of one or more harmonic signals having the same amplitude as the received signal(s) but out of phase with the phase of the received signal(s).

4. Device according to any of claims 1 to 3, also comprising a monitoring sensor (15) connected downstream of the injection circuit at the connection point of the circuit with the network, the monitoring sensor providing the harmonic compensation circuit (26) and/or the remote control compensation circuit (25) with a monitoring signal representing the signal injected into the network to allow the compensation circuits to make a correction for losses of amplitude and/or phase in the injection circuit.

5. Device according to any of claims 1 to 4, wherein the coupling circuit (16) is able to block transmission of the fundamental wave from the network to the injection circuit.

6. Device according to any of claims 1 to 5, wherein the injection circuit also comprises a shunt circuit (18) connected between the coupling circuit (16) and the bridge inverter (21), the shunt circuit (18) having very low impedance compared with the fundamental frequency to short-circuit the fundamental frequency.

7. Device according to claim 6, wherein the shunt circuit (18) also comprises a tank circuit tuned to the frequency of the remote control signal and/or to the frequencies of the harmonic signals to be injected, and which has relatively high impedance compared with these frequencies to minimize the injection power.

8. Centralized remote control system, **characterized in that** it comprises a device (14-15,30) according to any of claims 1 to 7, connected to a centralized remote control generator (12).

9. Centralized remote control system according to claim 8, also comprising a measurement sensor (13) connected to the centralized remote control generator upstream of the injection point of the remote control signal of the generator.

10. Centralized remote control system according to any of claims 8-9, **characterized in that** it is used in an electricity distribution substation, comprising a connection to the substation busbar able to supply the signal representing harmonics on the network.

## Patentansprüche

1. Vorrichtung (14-15, 30) für ein zentralisiertes Fernsteuerungssystem, die imstande ist, die Dämpfung des Fernsteuerungssignals und der Harmonischen in einem Stromnetz zu kompensieren, wobei die Vorrichtung einen Fernsteuerungs-Kompensationskreis (25) umfasst, der imstande ist, ein für den Fernsteuerungsgrad im Netz repräsentatives Signal zu empfangen und ein erstes Kompensationssignal (40) zu generieren und einen Injektionskreis, **dadurch gekennzeichnet, dass** sie weiterhin einen Harmonischen-Kompensationskreis (26) umfasst, der imstande ist, ein für das Niveau einer oder mehrere harmonischen Komponenten (33) im Netz repräsentatives Signal (31) zu empfangen und ein zweites Kompensationssignal (41) zu generieren, eine Summierschaltung (23), um das erste und zweite Kompensationssignal (40, 41) zu summieren, um ein Steuersignal (42) zu erzeugen, und **dadurch**, dass der Injektionskreis eine Energiequelle (22) umfasst, eine Wechselrichterbrücke (21) und einen an das Netz angeschlossenen Koppelkreis (16), wobei die Wechselrichterbrücke (21) mit der Summierschaltung (24) über eine Steuerkarte (23) angeschlossen ist, um die von der Spannungsquelle in Beantwortung des Steuersignals gelieferte Spannung zu trennen und um in das Netz ein allgemeines Signal zu injizieren, das dazu bestimmt ist, sowohl den Abfall des Signals der zentralisierten Fernsteuerung als auch das Vorhandensein einer oder mehrere Harmonischer zu kompensieren.

2. Vorrichtung nach Anspruch 1, wobei der Kompensationskreis (25) der zentralisierten Fernsteuerung einen Filter umfasst, der imstande ist, das für den Grad der zentralisierten Fernsteuerung im Netz repräsentative Signal zu extrahieren sowie einen Verarbeitungskreis, um das erste Kompensationssignal (40) zu generieren, das dieselbe Phase hat wie das vom Netz erhaltene Signal und eine Amplitude, die äquivalent ist zu der Amplitude des Signals des Netzes, multipliziert mit einem Verstärkungsfaktor.

3. Vorrichtung nach Anspruch 1 oder 2, wobei der Harmonischen-Kompensationskreis (26) einen Filter (32) umfasst, der imstande ist, das für ein oder mehrere Komponenten im Netz repräsentative Signal zu extrahieren sowie einen Verarbeitungskreis (34-39), um das zweite Kompensationssignal (41) zu generieren, wobei das Kompensationssignal aus einem oder mehreren harmonischen Signalen zusammengesetzt ist, die dieselbe Amplitude haben wie das oder die empfangenen Signale, aber eine Phase entgegengesetzt zur Phase des oder der empfangenen Signale.

4. Vorrichtung nach einem der Ansprüche 1 bis 3, die weiterhin einen Überwachungssensor (15) umfasst, der nachgelagert zum Injektionskreis am Verbindungspunkt des Kreises mit den Netz verbunden ist, wobei der Überwachungssensor dem Harmonischen-Kompensationskreis (26) und/oder dem Fernsteuerungs-Kompensationskreis (25) ein Überwachungssignal liefert, das für das in das Netz injizierte Signal repräsentativ ist, um den Kompensationskreisen zu ermöglichen, die Amplituden- und/oder Phasenverluste im Injektionskreis zu korrigieren.

5. Vorrichtung nach einem der Ansprüche 1 bis 4, wobei der Koppelkreis (16) imstande ist, die Weiterleitung der Grundwelle des Netzes an den Injektionskreis zu blockieren.

6. Vorrichtung nach einem der Ansprüche 1 bis 5, wobei der Injektionskreis weiterhin eine Nebenschlussleitung (18) umfasst, die zwischen dem Koppelkreis (16) und der Wechselrichterbrücke (21) geschaltet ist, wobei die Nebenschlussleitung (18) eine im Verhältnis zur Grundfrequenz sehr niedrige Impedanz aufweist, um die Grundfrequenz kurzzuschließen.

7. Vorrichtung nach Anspruch 6, **dadurch gekennzeichnet, dass** die Nebenschlussleitung (18) weiterhin einen auf die Frequenz des Fernsteuerungssignals und/oder auf die Frequenzen der harmonischen Signale, die zu injizieren sind, abgestimmten Sperrkreis umfasst und der eine im Verhältnis zu diesen Frequenzen relativ hohe Impedanz besitzt, um die Injektionsleistung zu minimieren.

8. Zentralisiertes Fernsteuerungssystem, **dadurch gekennzeichnet, dass** es eine Vorrichtung (14-15, 30) nach einem der Ansprüche 1 bis 7 umfasst, die mit einem zentralisierten Fernsteuerungsgenerator (12) verbunden ist.

9. Zentralisiertes Fernsteuerungssystem nach Anspruch 8, das weiterhin einen Messwertsensor (13) umfasst, der mit dem Generator der zentralisierten Fernsteuerung nachgelagert zum Injektionspunkt des Fernsteuerungssignals des Generators verbunden ist.

10. Zentralisiertes Fernsteuerungssystem nach einem der Ansprüche 8 bis 9, **dadurch gekennzeichnet, dass** es in einer Unterstation zur Verteilung von Strom verwendet wird, eine Verbindung mit dem Schienensatz der Unterstation umfassend, die imstande ist, das für die Harmonischen im Netz repräsentative Signal zu liefern.

Fig.1

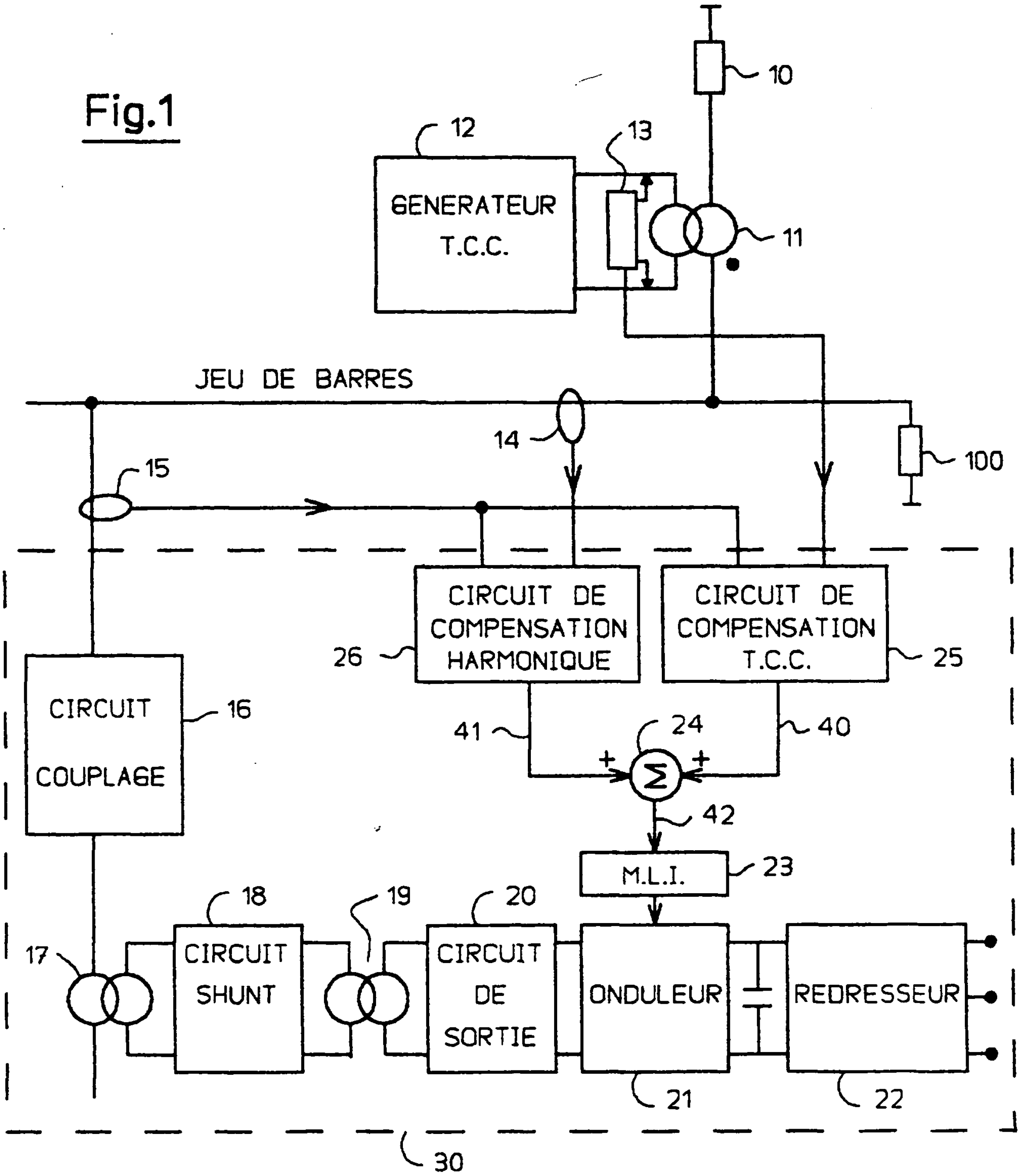
10
12
13
GENERATEUR
T.C.C.
11
JEU DE BARRES
14
100
15
CIRCUIT DE
COMPENSATION
HARMONIQUE
CIRCUIT DE
COMPENSATION
T.C.C.
26
25
CIRCUIT
COUPLAGE
16
41
24
40
42
M.L.I.
23
18
19
20
17
CIRCUIT
SHUNT
CIRCUIT
DE
SORTIE
ONDULEUR
REDRESSEUR
21
22
30

Fig.2

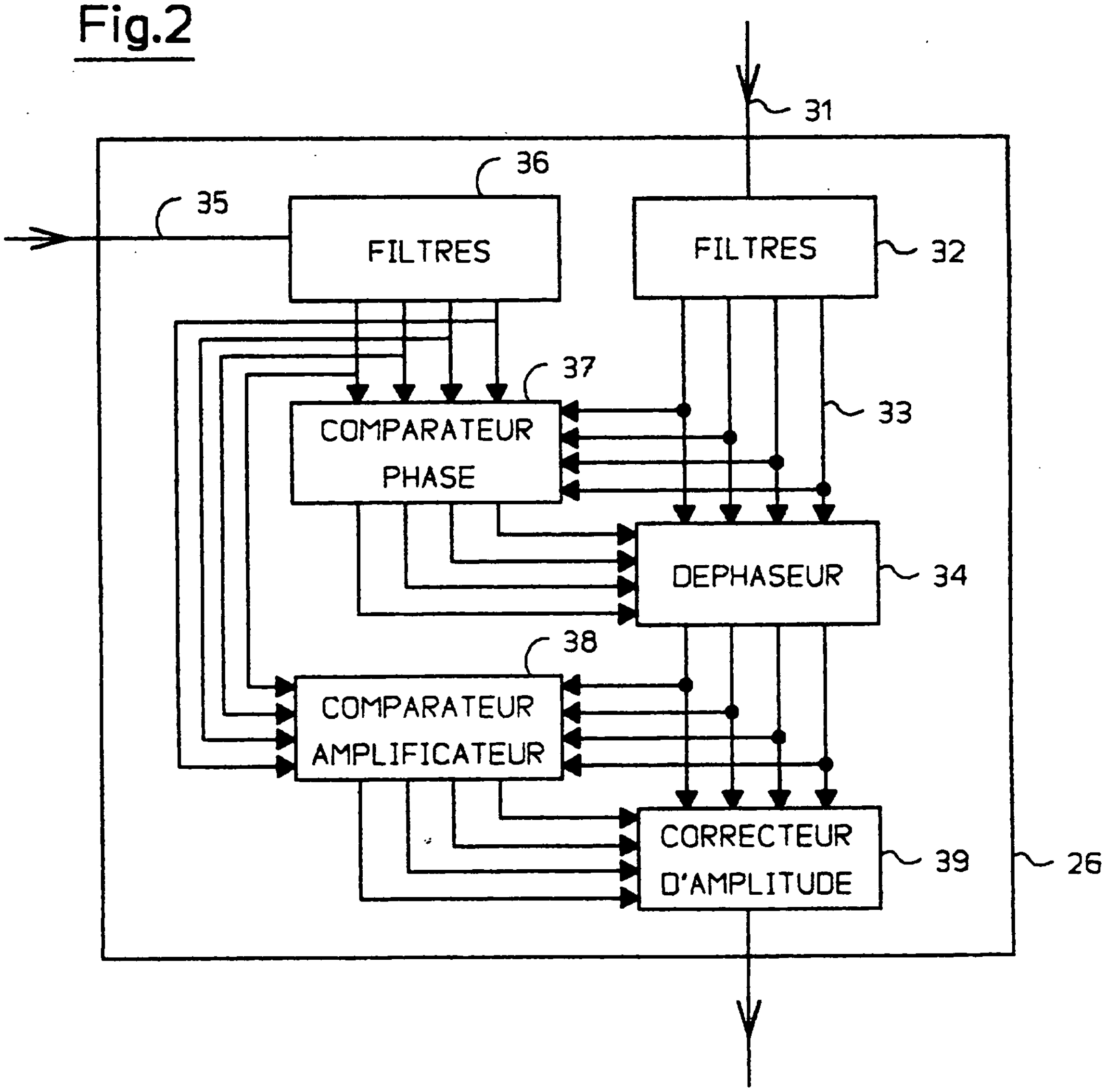
31
36
35
FILTRES
FILTRES
32
37
33
COMPARATEUR
PHASE
DEPHASEUR
34
38
COMPARATEUR
AMPLIFICATEUR
CORRECTEUR
D'AMPLITUDE
39
26

Fig.3

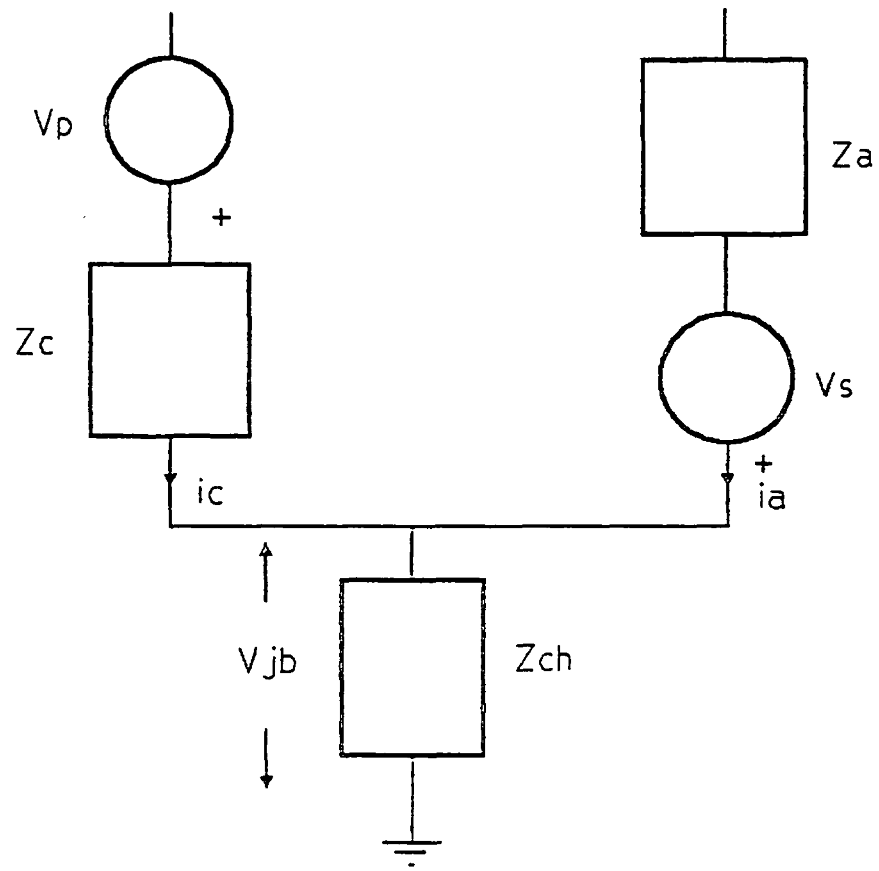

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0689300 A
- FR 2716045